Europäisches Patentamt

European Patent Office

Office européen des brevets

(19)

(11) Veröffentlichungsnummer: **0 022 919**
**B1**

(12) # EUROPÄISCHE PATENTSCHRIFT

(45) Veröffentlichungstag der Patentschrift: **22.02.84**

(21) Anmeldenummer: **80103068.5**

(22) Anmeldetag: **03.06.80**

(51) Int. Cl.³: **B 29 D 3/02**, H 05 B 3/36, B 64 F 5/00

(54) Verfahren zum Gewebeimprägnieren durch Harzinjektionen.

(30) Priorität: **13.07.79 DE 2928293**

(43) Veröffentlichungstag der Anmeldung:
**28.01.81 Patentblatt 81/4**

(45) Bekanntmachung des Hinweises auf die Patenterteilung:
**22.02.84 Patentblatt 84/8**

(84) Benannte Vertragsstaaten:
**CH FR GB IT LI**

(56) Entgegenhaltungen:
**DE - A - 2 160 358**
**DE - A - 2 856 400**
**FR - A - 2 121 829**
**FR - A - 2 224 271**
**GB - A - 762 462**
**GB - A - 831 735**
**US - A - 2 836 529**

**PATENTS ABSTRACTS OF JAPAN, Band 3, Nr.**
**123, 16. Oktober 1979 Seite 34 C 61**

(73) Patentinhaber: **Messerschmitt-Bölkow-Blohm**
**Gesellschaft mit beschränkter Haftung**
**Postfach 801109**
**D-8000 München 80 (DE)**

(72) Erfinder: **Wackerle, Peter, Dipl.-Ing.**
**Oderweg 7**
**D-8012 Ottobrunn (DE)**
Erfinder: **Franz, Dieter**
**Grafengars 46**
**D-8261 Jettenbach (DE)**

Courier Press, Leamington Spa, England.

## Verfahren zum Gewebeimprägnieren durch Harzinjektion

Die Erfindung bezieht sich auf ein Verfahren zum Gewebeimprägnieren durch Harzinjektion von großflächigen Bauteilen, die ein Kohlefasergewebe aufweisen.

Vor allem beim Imprägnieren von großflächigen Bauteilen, wie beispielsweise Rotorblättern von Hubschraubern etc. oder von komplizierten Strukturen, tritt das Problem auf einen kontrollierten Harzflusses beim Injizieren zu erzeugen, denn die örtliche Temperatur des Harzes bestimmt dessen Viskosität und damit den Harzfluß selbst. Diesen Problemen versucht man mit teuren und aufwendigen beheizten Formen zu begegnen. Bei der Fertigung von Faserverbundwerkstoff-Elementen mit heißhärtenden Systemen ist häufig jedoch eine Beheizung durch externe Anlagen wie Wärmeschrank, Autoklav etc. infolge der Größe und Kompliziertheit des Bauteils überhaupt nicht durchführbar.

Im Einzel- und Prototypenbau bedeutet die Anfertigung von entsprechenden Formen und Heizanlagen einen unverhältnismäßig hohen Aufwand.

Die Aufgabe, die der vorliegenden Erfindung zugrunde liegt, besteht darin, ein Verfahren der eingangs genannten Art zu schaffen, durch das beheizte Formen völlig entfallen können und der Prozeß rationeller und besser durchgeführt werden kann.

Diese Aufgabe wird durch die im kennzeichnenden Teil des Anspruchs 1 angegebenen Merkmale, ggf. auch unter zusätzlicher Anwendung der in dem Folge-Ansprüchen niedergelegten Maßnahmen gelöst. Die Erfindung ist nachfolgend an einem Ausführungsbeispiel beschrieben und erläutert sowie in der Zeichnung dargestellt. Es zeigen:

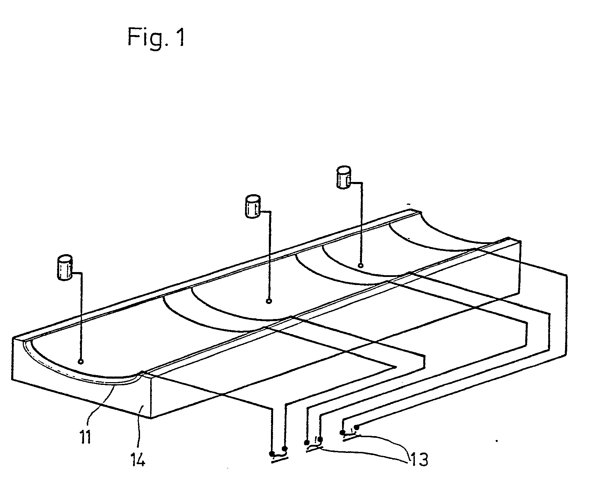

Fig. 1 das Schema des thermisch kontrollierten Injektionsverfahrens,

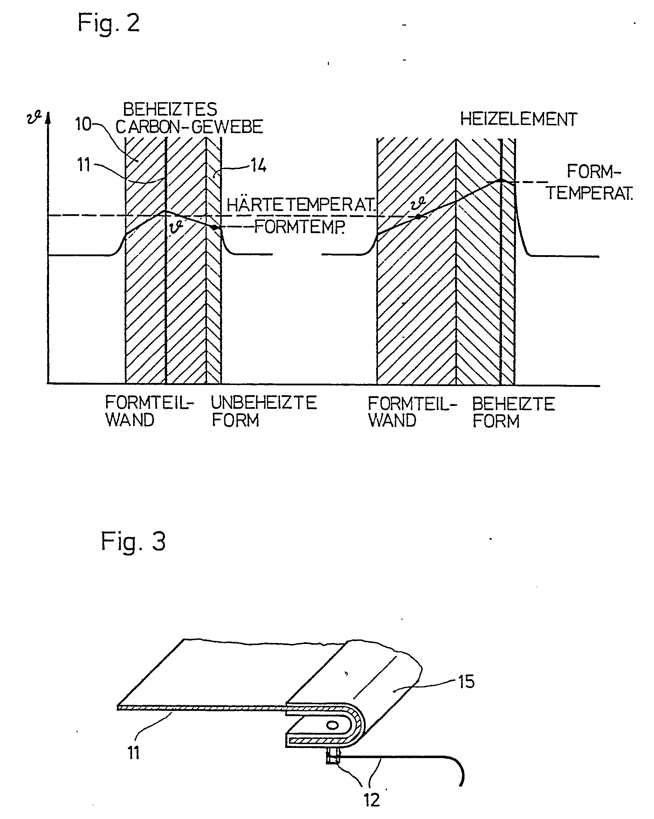

Fig. 2 eine Gegenüberstellung des erfindungsgemäßen Verfahrens und des bisherigen Verfahrens des Standes der Technik, bezüglich des Temperaturverlaufes in Diagrammen,

Fig. 3 eine skizzenartige perspektivische Darstellung eines elektrischen Anschlusses für das Kohlefasergewebe.

Das vorstehend genannte Verfahren zur Harzinjektion beim Gewebeimprägnieren von großflächigen, versehenen mit einem Kohlefasergewebe 11 Bauteilen geht davon aus, dieses Kohlefasergewebe 11 infolge seiner elektrischen Leitfähigkeit zur direkten Beheizung des zu laminierenden Bauteils 10 heranzuziehen. Gemäß dieses allgemeinen Erfindungsgedankens übernimmt also ein stromdurchflossenes Kohlefasergewebe die Funktion eines Heizelementes — ähnlich einer Heizspule — innerhalb des Bauteils selbst.

Es war nun der Nachweis der Durchführbarkeit dieses Verfahrens zu erbringen. Ausgehend vom spezifischen Widerstand von Kohle $R_C$ wurde aus dem Metergewicht MG, dem Flächengewicht $G_A$ und der Dichte $\gamma$ der spezifische Widerstand einer Faser $R_F$ bzw. eines Gewebes $R_G$ die Beziehung hergestellt:

$$R_F = k \cdot R_C \cdot \frac{\gamma}{MG} \quad ; \qquad (1)$$

und

$$R_G = k \cdot R_C \cdot \frac{\gamma}{G_A} \quad ; \qquad (2)$$

Hierbei ist der Faktor "k" ein Aufbesserungsfaktor, der von der Art der verwendeten Faser abhängt. Experimentell wurde für

G 801 und G 803-Gewebe ermittelt:
  $k \approx 1,1$ (Fr.Brochier Lyon)
T 755, M 40 A, Sigri NF-Fasern:
  $k \approx 0,2 \ldots 0,4$
(Fa. Sigri bei Maitingen)
Der Widerstand (spezifisch) von Kohle beträgt:
  $R_C = 40 \ \Omega \ mm^2/m$.

Setzt man $\gamma$ in $g/cm^3$, MG in g/m, $G_A$ in $g/m^2$ ein, so erhält man aus den Gleichungen (1) und (2) den spezifischen Widerstand der Faser $R_F$ in $\Omega/m$ und den spezifischen Widerstand des Gewebes in $\Omega \ cm/m$; daraus ergibt sich nun der elektrische Widerstand R wie folgt:

$$R = R_F \quad . \quad 1/n \qquad (3)$$

$$R = R_G \quad . \quad l/b.n.$$

hierbei bedeuten:
  l = Länge in Stromflußrichtung (m)
  b = Breite des Lagenaufbaus (cm)
  n = Lagenzahl bzw. Anzahl der Faserstränge.

Um nun eine Überheizung der elektrischen Stromzuleitungen 12 zu vermeiden, müssen diese eine spezielle Auslegung des Querschnittes erfahren, wobei es sich gezeigt hat, daß dieser Querschnitt, bezogen auf den spezifischen Widerstand, ca. 4 bis 5 mal so groß sein muß der des Faseraufbaus; folgende Gleichungen ergeben sich:

Leiterquerschnitt der Zuleitung $A_L$ ($mm^2$):

$$A_L = 4 .. 5 A_F \cdot \frac{R_L}{R_C} \quad ; \qquad (4)$$

bzw.

$$A_L = 4 .. 5 A_G \cdot \frac{R_L}{R_C} \quad ; \qquad (5)$$

Hierbei ist:

$$A_F = \frac{n \cdot MG}{\gamma} \quad ; \quad (6)$$

$$A_G = \frac{n \cdot G_A \cdot b}{\gamma} \quad ; \quad (7)$$

$A_F$ (mm²) ist der Faserquerschnitt und $A_G$ (mm²) ist der Querschnitt des Gewebeaufbaus.

Es hat sich nun ergeben, daß bei der Erprobung eines Gewebes, das an verschiedene Stromquellen angeschlossen wurde, um zu untersuchen, wie sich das Gewebe erwärmt und mit welchen Spannungen und Stromstärken zum Erhalt einer optimalen Leistungsaufnahme gefahren werden kann, der gemessene Widerstand R für Gleich- und Wechselstrom bei unterschiedlichen Spannungsniveaus als Rechengrundlage zur Dimensionierung einer Stromquelle näherungsweise Verwendung finden kann.

Es zeigte sich ferner, daß es nicht nur von den elektrischen Größen abhängt, welche Temperaturen mit einem stromdurchflossenen Gewebeaufbau erreicht werden, sondern auch von der thermischen Isolation und im stationären Bereich auch zusätzlich von der zu beheizenden Wärmekapazität. Es hat sich zwischen den berechneten und dem gemessenen Temperaturverlauf eine gute Übereinstimmung der Temperaturkurven erwiesen.

Zur Stromeinleitung werden die Enden des Kohlefasergewebes 11 in einem Kupferstreifen 15 eingefalzt und mit der elektrischen Zuleitung 12 verbunden. Dies kann durch Verlötung, Verschraubung etc. erfolgen. Es versteht sich von selbst, daß der Querschnitt dieses Kupferstreifens und der Schrauben etc. gemäß den Berechnungen für die Leitungsquerschnitte nach den Gleichungen (4 bis 7) dimensioniert werden.

Als Stromquellen 13 sind zur Vermeidung von Unfällen Niederspannungsstromquellen bis zu 65 V zu empfehlen. Hierbei hat es sich gezeigt, daß speziell Schweißtransformatoren aufgrund der Leistungsfähigkeit und der Schutzschaltfunktionen gut geeignet sind. Die Kohlegewebeheizung nach dem vorgeschlagenen Verfahren erfordert ebenfalls aus Sicherheitsgründen gegenüber anderen leitenden Geweben und gegenüber einer elektrisch leitenden Form 14 eine elektrische Isolierung. Hierzu wird die Verwendung einer Lage aus Glasgewebe — beispeilsweise von Typ 92 140 — vorgeschlagen. Auch die Kupferstreifen an den Enden sind gegenüber der Form 14 zu isolieren. Diese Kohlegewebeheizung hat sich durch die Möglichkeit einer Temperaturregelung für die Aushärtung von Laminaten bewährt.

Durch das erfindungsgemäße Verfahren ist somit die bisher wirtschaftlichste Methode zur Beheizung von großen Laminatflächen geschaffen worden. Sowohl der Energiebedarf als auch der Aufwand für Formen und Vorrichtungen ist wesentlich reduziert worden.

Das vorgeschlagene Verfahren weist aber noch eine Reihe weiterer wesentlicher Vorteile auf, so beispielsweise die ermöglichte Gewebevorwärmung, damit die Harzviskosität über große Flächen schon bei Prozeßbeginn bestmöglich konstant gehalten werden kann. Bei geometrisch komplizierten Konturen des Bauteils — wie Ecken und Engstellen — ist es möglich, infolge der Temperaturregelung durch eine örtlich überhöhte Temperaturführung für den optimalsten Harzfluß zu sorgen. Außerdem kann zur Erreichung einer besseren Benetzung der Fasern die Viskosität des Tränkharzes durch kurzzeitiges Aufheizen stark herabgesetzt werden. Von besonderer Bedeutung hierbei ist, daß eine Überheizung bzw. eine Übertemperatur nur an der Grenzschicht von Faser und Harz erzeugt wird, was bei den bisherigen Verfahren nicht möglich ist, ohne daß der Gelierprozeß negativ beeinflußt wird.

Abschließend seien die Vorteile des vorbeschriebenen Verfahrens zusammengefaßt:

Es erlaubt die Erstellung einfachster Gießformen, die auch an unzugänglichen Stellen — wie beispielsweise Querwänden, die nicht mit der Form in Verbindung kommen — beheizbar sind; generell ist eine individuelle Temperaturführung gegeben.

Die Heizelemente bleiben als tragende Struktur im Bauteil selbst erhalten, wobei zu dessen Herstellung an allen kritischen Stellen das Fließverhalten des Tränkharzes individuell variiert werden kann. Die Formtemperatur ist wesentlich geringer und daher auch die Wärmeverluste, wobei ein Wärmetransport von außen her in das Formteil nicht mehr erforderlich ist.

**Patentansprüche**

1. Verfahren zum Gewebeimprägnieren durch Harzinjektion von großflächigen Bauteilen mit einem Kohlefasergewebe, dadurch gekennzeichnet, daß das oder die Kohlefasergewebe (11) des Bauteils (10) als elektrische Heizmatte zur Steuerung der Imprägnierharz-Viskosität während des Benetzungsvorganges verwendet werden und mit elektrischen, partiell steuerbaren Stromzuleitungen (12) verbunden werden, deren Querschnitt das Vier- bis Fünffache des Fasergewebequerschnitts multipliziert mit dem Quotient

$$\frac{RL}{RC}$$

aus den spezifischen Widerständen der Stromzuleitung (12) und der Kohlefaser beträgt.

2. Verfahren nach Anspruch 1, dadurch gekennzeichnet, daß zur Stromeinleitung die Enden des Kohlefasergewebes (11) in einen Kupferblechstreifen (15) eingefaßt werden und dieser mit der Stromzuführung (12) verbunden wird.

3. Verfahren nach den Ansprüchen 1 oder 2, dadurch gekennzeichnet, daß als Stromquellen (13) Niederspannungsaggregate (bis zu 65 V) verwendet werden.

4. Verfahren nach den Ansprüchen 1 bis 3, dadurch gekennzeichnet, daß das Kohlefasergewebe (11) gegenüber einer elektrisch leitenden Form (14) mittels Glasfasergewebe isoliert wird.

## Revendications

1. Procédé d'imprégnation par injection de résine du tissu d'éléments de construction de grande surface comportant un tissu de fibres de carbone, caractérisé par le fait que le ou les tissus de fibres de carbone (11) de l'élément de construction (10) sont utilisés en tant que mats chauffants électriques pour le réglage de la viscosité de la résine pendant le processus d'imprégnation et sont reliés à des lignes (12) d'amenée de courant électrique à commande partielle dont la section transversale représente de quatre à cinq fois la section transversale du tissu de fibres multipliée par le quotient

$$\frac{RL}{RC}$$

des résistances spécifiques de la ligne (12) d'amenée de courant et des fibres de carbone.

2. Procédé selon la revendication 1, caractérisé par le fait que pour l'amenée du courant les extrémités du tissu de fibres de carbone (11) sont enchassées dans une bande de tôle de cuivre (15) et que celle-ci est raccordée à l'amenée de courant (12).

3. Procédé selon les revendications 1 ou 2, caractérisé par le fait que comme sources de courant (13) on utilise des appareils basse tension (jusqu'à 65V).

4. Procédé selon les revendications 1 à 3, caractérisé par le fait que le tissu de fibres de carbone (11) est isolé au moyen d'un tissu de fibres de verre par rapport à un moule (14) électriquement conducteur.

## Claims

1. A method of fabric impregnation by resin injection of large-area structural members having a carbon fibre fabric, characterised in that the carbon fibre fabric or fabrics (11) of the structural member (10) are used as an electric heating mat for controlling the viscosity of the impregnating resin during the wetting operation and are connected to electrical partially-controllable current supply leads (12) the cross-section of which amounts to four to five times the cross-section of the fibre fabric multiplied by the quotient

$$\frac{RL}{RC}$$

of the specific resistance of the current supply lead (12) and the carbon fibre.

2. A method according to claim 1, characterised in that, for the introduction of current, the ends of the carbon fibre fabric (11) are enclosed in a copper sheet strip (15) and this is connected to the current lead-in wire (12).

3. A method according to claims one or two, characterised in that as sources of current (13) low voltages (up to 65v) are used.

4. A method according to claims one to three, characterised in that the carbon fibre fabric (11) adjacent on an electric conducting form (14) is isolated by means of glass fibre fabric.

Fig. 1

11
14
13

Fig. 2

BEHEIZTES CARBON-GEWEBE

HEIZELEMENT

$\vartheta$

10
11
14

HÄRTETEMPERAT.
FORMTEMP.

$\vartheta$

$\vartheta$

FORM-
TEMPERAT.

FORMTEIL-
WAND

UNBEHEIZTE
FORM

FORMTEIL-
WAND

BEHEIZTE
FORM

Fig. 3

15

11

12